(19)

Europäisches Patentamt
European Patent Office
Office européen des brevets

(11) **EP 2 905 670 A1**

(12) **EUROPEAN PATENT APPLICATION**

(43) Date of publication:
**12.08.2015 Bulletin 2015/33**

(51) Int Cl.:
*G05D 23/19* (2006.01)    *F24F 11/00* (2006.01)

(21) Application number: **14162116.9**

(22) Date of filing: **27.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.02.2014 GB 201402158**

(71) Applicant: **Passivsystems Limited**
**Newbury, Berkshire RG14 2PZ (GB)**

(72) Inventors:
- **Jin, Xiaoran**
  **London WC1E 6BT (GB)**
- **Brostoff, Sacha**
  **London WC1E 6BT (GB)**

- **Carter, Edwin**
  **Newbury**
  **Berkshire RG14 2PZ (GB)**
- **Fletcher, Jane**
  **Newbury**
  **Berkshire RG14 2PZ (GB)**
- **Harding, Fraser**
  **Newbury**
  **Berkshire RG14 2PZ (GB)**
- **Marshall, Paul**
  **London WC1E 6BT (GB)**
- **Wang, Jun**
  **London WC1E 6BT (GB)**

(74) Representative: **Sharrock, Daniel John et al**
**Nash Matthews**
**90-92 Regent Street**
**Cambridge**
**CB2 1DP (GB)**

(54) **Apparatus and method for analysing the operation of a temperature management system configured by a user**

(57)    Apparatus for analysing the operation by a user of a temperature management system for heating and/or cooling a space within a building.

The apparatus comprises a data processing arrangement configured to analyse a user control input to determine whether it corresponds to predetermined category of user input. If so, it calculates a value relating to the effect of the user control input on the energy consumption of the system over a subsequent time period and generates an output signal to cause a message to be delivered to the user comprising the calculated value.

EP 2 905 670 A1

FIG. 1

**Description**

Field of the invention

The present invention relates to apparatus and methods for analysing the operation by a user of a temperature management system for heating and/or cooling a space within a building. More particularly, it is concerned with monitoring a user's interaction with such a system and generating messages to be sent to the user with a view to reducing the energy consumption of a system.

Background to the invention

There are a number of existing systems that provide general information regarding energy consumption to the user of a temperature management system. For example, EP 2157408 describes a display device which shows information relating to energy consumption and enables the user to set a target to save energy and see whether the target is fulfilled or not.

Summary of the invention

The present invention provides apparatus for analysing the operation by a user of a temperature management system for heating and/or cooling a space within a building, wherein the apparatus comprises a data processing arrangement having:

an input arrangement for receiving input signals relating to the temperature inside the space and outside the building, and user control inputs;
an electronic memory for storing a schedule of set point temperatures corresponding to the duration of a control period; and
an output arrangement for outputting signals,

and wherein the processing arrangement is configured to:

analyse a user control input received via its input arrangement to determine whether it corresponds to a predetermined category of user control inputs;
after detection of a user control input which corresponds to one of a plurality of predetermined categories of user control inputs, calculate a value relating to the effect of the user control input on the energy consumption of the system over a subsequent time period; and
generate an output signal at its output arrangement to cause a message to be delivered to the user comprising the calculated value.

In this way, a user is made aware of the consequences of a particular input in terms of its impact on the predicted energy consumption of the system. Informing the user of the consequences of their changes has been found to have a considerable influence on the future interactions between the user and the system with a view to reducing energy consumption.
Information for the user may be provided in the message along with the calculated value and the information content may vary in accordance with the category of user control input that was detected.
The calculated value may represent the effect of the user control input in the form of an amount of additional energy that will be consumed or an amount of energy that will be saved as a consequence of the user control input over a subsequent predetermined time period. It may instead correspond to a monetary cost or saving over a subsequent period of time. Alternatively, it may be a percentage increase or decrease in fuel consumption, calculated for a subsequent time period.
The subsequent time period may be the remainder of the current day, or the next twenty-four hours, or a longer period such as a week if the user control input made changes to the schedule which have an effect over a longer timescale. Typically, the control period for a domestic heating management system is one week.
A user control input may be a change to the current set point temperature. It may instead be a change to the stored schedule of set points.
A stored schedule will often consist of blocks of time with a different temperature set point associated with each block. A temperature management system may be configured with a number of status settings, each having a corresponding temperature set point, which may be adjusted by a user. The status settings may be "in", "out", "away" or "asleep", for example. They serve to make the interaction with the system more "user friendly", as the user can then define their preferred schedule with reference to these status settings, by allocating a status setting to each block in the schedule.

A user control input may represent an instruction to change the current status setting for the temperature management system. Alternatively, it may represent an instruction to change the temperature associated with a status setting.

Where the user control input corresponds to a change to the current set point, the processing arrangement may be configured to generate the calculated value on the basis that the new set point is maintained for the remainder of the current time block of the schedule. The calculated value would therefore relate to the difference between the predicted energy consumption at (i) the new set point and (ii) at the old set point, for the remainder of the current time block.

Where the user control input corresponds to a change to the temperature set point associated with a status setting, the processing arrangement may be configured to generate the calculated value on the basis that the new temperature set point is used for that status setting whenever it applies according to the stored schedule during a subsequent time period. That time period may be the remainder of the current day, or the next twenty-four hours, for example. The calculated value would therefore relate to the difference between the predicted energy consumption using (i) the new temperature set point for that status setting and (ii) at the old set point for that status setting, over the subsequent time period.

Preferably the processing arrangement is configured to generate the output signal when at least two user control inputs have been detected which correspond to the same category. In this way, the apparatus is able to detect repetition of the same category of control input, representing a particular pattern of behaviour by the user. The apparatus may be configured to generate an output signal where a certain number of user control inputs of the same category are detected within a predetermined time period, such as three times in the same week.

For example, one of the predetermined categories of user control inputs detected by the apparatus is requests for an increase in the current set point when the current temperature of the space is below the current set point. This may indicate that the user expects the space to heat-up more quickly if a higher target set point is reached. The apparatus is able to respond by generating a message indicating that the space cannot be heated up more quickly and providing an estimate of the increased energy consumption predicted to result from the setting of a higher set point.

According to a further embodiment, one of the predetermined categories of user control inputs is requests for an increase or decrease in the current set point by more than the predetermined amount. In these circumstances, the apparatus generates a message including an indication of the greater energy consumption expected as a result of an increase in the current set point, or the energy saving expected as a result of a decrease in the current set point.

One of the predetermined categories of user control inputs may be inputs indicating that the space will be unoccupied. For example, the temperature management system may allow a user to set the system status to "out". The system may be configured to respond to an indication that the space will be unoccupied from the time of the input onwards by switching to a lower set point (or higher set point in a cooling system) or simply ceasing to control the temperature of the space. The apparatus may be configured to cause a message to be delivered to the user related to the energy saving resulting from this input over a subsequent time period. This time period may correspond to the time between the user input and the time when the system was due to switch to the "out" status (or to cease heating) according to its stored schedule.

The processing arrangement may be configured to calculate the value with reference to the schedule and the schedule as modified by the user control input.

In a preferred embodiment, one of the predetermined categories of user inputs is user inputs setting a set point in the schedule for an overnight period or a period identified by the user as a period when the space will be unoccupied, with the set point being greater than a predetermined threshold, and the calculated value is determined with reference to the schedule as modified by the user control input and the schedule as modified by a set point lower than that set by the user control input for the relevant period.

In a further embodiment, one of the predetermined categories of user inputs is user inputs requesting a decrease in the current set point when the current temperature of the space is below the current set point, and the current set point is above a predetermined threshold. In this instance, the calculated value is preferably determined with reference to the current schedule and the schedule as modified by a set point lower than that of the current schedule for the current period.

The electronic memory of the data processing arrangement may store a maximum message generation rate for each category of user control inputs and the data processing arrangement only generates an output signal causing a message to be delivered providing that this will not exceed the maximum message generation rate for the relevant category of user control inputs. In this way, the frequency of message generation for each category of user control input can be limited.

Similarly, the electronic memory may store an overall maximum message generation rate and only generates an output signal causing a message to be delivered providing that the overall maximum message generation rate is not exceeded. This sets a global threshold to control the frequency of generation of messages in response to any of the categories of user control input.

In a preferred embodiment, the processing arrangement is configured to check whether the calculated value exceeds a predetermined value threshold and only generates an output signal at its output arrangement to cause a message to be delivered to the user if the value threshold is exceeded. This serves to filter out messages in response to user control inputs which have an insignificant effect on energy consumption.

The processing arrangement may be configured to decrease or increase the predetermined value threshold to avoid filtering out too many messages or allowing too many messages to be sent.

In further embodiments, a priority score is assigned to each category of user control inputs. This serves to provide a measure of the relative importance of generating a message in response to each category of user control inputs. The data processing arrangement may be configured to prioritise responding to user control inputs in a higher scoring category over those in lower scoring categories during a predetermined time period.

The present invention further provides a method of analysing the operation by a user of a temperature management system for heating and/or cooling a space within a building, wherein the apparatus comprises a data processing arrangement having:

an input arrangement for receiving input signals relating to the temperature inside the space and outside the building, and user control inputs;
an electronic memory for storing a schedule of set point temperatures corresponding to the duration of a control period; and
an output arrangement for outputting signals,

and the method comprises carrying out the following steps with the data processing arrangement:

analysing a user control input received via the input arrangement and determining that it corresponds to one of a plurality of predetermined categories of user control inputs;
calculating a value relating to the effect of the user control input on the energy consumption of the system over a subsequent time period; and
generating an output signal at its output arrangement to cause a message to be delivered to the user comprising the calculated value.

It will be appreciated that features referred to herein in the context of control of a heating system are also applicable to control of a cooling system, with references to temperate or set point increases or decreases, or values above or below one another, being reversed as appropriate.

Brief description of the drawings

Embodiments of the invention will now be described by way of example and with reference to the accompanying schematic drawings wherein:

Figure 1 is a block diagram representing a temperature management system in combination with apparatus embodying the present invention;

Figure 2 is a flow diagram representing an embodiment of an analysis method according to the invention; and

Figures 3 to 6 are plots of temperature against time relating to examples given in the description.

Detailed description

Embodiments of the present invention involve analysing temperatures within a house and a householder's interactions with the heating and/or cooling system (such as making changes to set points), and using this information to generate personalised feedback and recommendations (perhaps sent by text message) that will help the householder manage their heating system better and ultimately save energy. Recommended courses of action can optionally be suggested, and then implemented in response to a simple acceptance step by the householder.

The apparatus may be configured to process input signals consisting of specific user interactions such as a change to the current set point or changes to the heating schedule, and send messages in response to the interactions that are specifically targeted at encouraging or discouraging particular patterns of behaviour by the householder.

According to one embodiment, the apparatus is configured to carry out the following steps:

1. Record and filter input data (historical and live interactions);
2. Analyse this data, looking for specific categories of input and/or behaviour patterns;
3. Calculate the impact of selected inputs on energy consumption; and
4. Decide which messages to send (by filtering and ranking under various criteria), and deliver to the householder (e.g. by SMS).

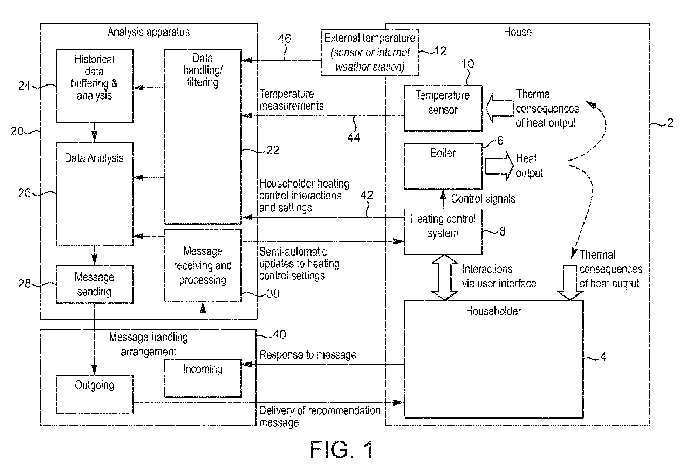

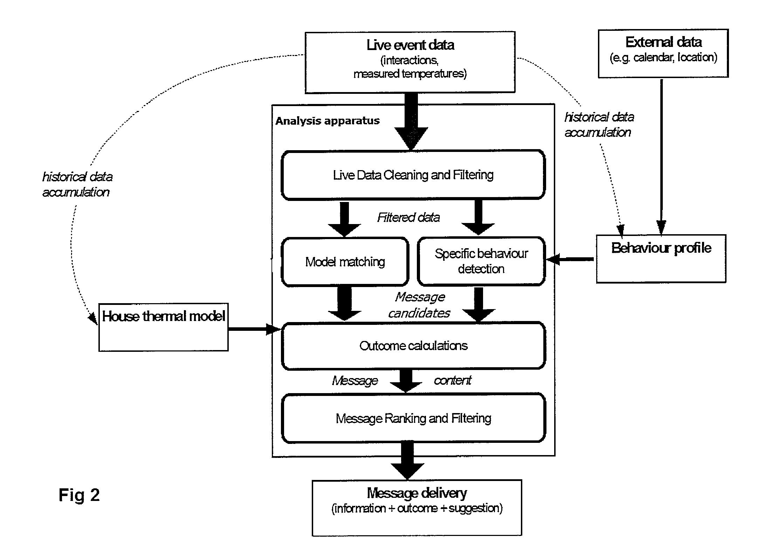

These steps are described in more detail below. The overall process is illustrated in Figure 2, in the context of the system diagram in Figure 1.

In Figure 1, a schematic diagram is shown to illustrate the interactions between a heating system and analysis apparatus embodying the invention. The heating system is provided to heat space within a house 2 for the benefit of a householder 4. The heating system includes a heat generator such as a boiler 6 to generate heat controlled by a heating control system 8. The temperature within the space to be heated by the heating system is monitored by a sensor 10. Signals relating to the temperature outside the house are generated by an external temperature sensor 12 or received from a source of weather information via the internet.

The heating system is interconnected with analysis apparatus 20. This includes an arrangement for data processing in response to input signals. It comprises an input data handling/filtering module 22, a historical data buffering and analysis module 24, a data analysis module 26, a message sending module 28 and a message receiving and processing module 30.

Messages are sent from and received into the analysis apparatus via a message handling arrangement 40.

The inputs to the analysis apparatus are:

(a) System settings (42): the user's choice of schedule, and default set point temperatures. Both of these may be configured in terms of easier settings for the user such as status indications. For example, house occupancy state which could be In, Out, Asleep or Away, which each have associated default set points; or some type of house mode such as Normal, Term-time, or Guests;

(b) Programmed changes (42): future specifications of set point or occupancy state that vary from the default schedule, for example an Away period set up for a holiday;

(c) In-the-moment changes (42): user adjustments to the current set point or immediate changes to occupancy state;

(d) Measured temperatures: room temperatures (44) in the house, and external temperatures (46) (perhaps via an internet weather service).

The data inputs go through an initial stage of processing in modules 22 and 24:

- Historical data: data from the last few months is stored for processing into behaviour profiles, and the house thermal model (see below);
- Pre-processing to convert raw system events into meaningful user control inputs, by (a) buffering recent events, (b) cleaning to remove interactions that are shortly rescinded or events received out of order, and (c) filtering and combining events.

The output from this stage is filtered data which consists of what the set point was changed from (and when), what it was changed to (and when), and what device was used to make the change.

This apparatus is configured to detect particular categories of input. Each category may require a particular analysis algorithm. These algorithms may require a number of different quantities to be calculated from historical temperature and interaction data:

1. Frequency for each category of actions done in a recent period (e.g. last four weeks). Examples of interactions are:

- Increasing or decreasing set point temporarily;
- Changing occupancy state to Out; and
- Setting an Away period.

2. Impact of these actions on energy consumption.

3. Context of these actions (e.g. changes in room temperature around the time of the interaction, external temperature at the time).

4. Connections with external sources of data, such as:

- geographic location (e.g. on a smartphone);
- an electronic calendar;
- social media connections (e.g. householder's activity or behaviour of similar people);
- anything that is known in advance about the household (e.g. parents with young children, which would suggest a particular occupancy pattern).

One example of an analysis algorithm detects when the householder increases the set point again before it is reached, and has done this on several different occasions. An educational message is then generated.

The apparatus may also choose to highlight a recent interaction, for example as being particularly beneficial.

Further specific examples of analysis algorithms to detect categories of input that may need to be highlighted via a message are as follows:

- Increasing the set point once (by more than a minimum margin), and then increasing the set point again (by more than a minimum margin) before the room reached the first specified temperature. This behaviour could indicate that the householder misunderstands a thermostatic heating system. The outcome calculation would indicate the energy saving by sticking with the first set point (which might be comfortable enough).

- Initially choosing a high set point and subsequently reducing the temperature slightly. This might indicate that the householder believes the house will heat quicker with a higher set point. The outcome calculation would indicate the energy saving made by choosing the lower set point initially.

- Choosing a set point for night-time periods or periods when the house is occupied that is too high. This can be detected by either the default Out or Asleep temperature being above a pre-determined threshold (e.g. 17C) or by detecting that the temperature had actually fallen below set point during these periods causing heat to be requested from their boiler. The householder might believe they could save energy by keeping their walls warm (for example), but the outcome calculation would show the energy saving made by choosing a lower set point.

- Choosing a default In set point that is high (perhaps above a predetermined threshold) and switching manually between In and Out, with the temperature never reaching the In setpoint. The outcome would indicate the energy saving of choosing a more achievable set point and managing to that, rather than the arbitrary level that is what the heating system can achieve in the time.

In general, messages are more influential on a user's behaviour if accompanied by some additional information reflecting the energy-saving consequences of taking up the suggestion or of the action that had just been performed.

Prediction of the outcome of a change to heating settings is preferably carried out with reference to a thermal model of the building. This might be determined by a method such as that of the present applicant's UK patent application no. 1320134.8.

Another approach is as follows:

- Determine the cooling coefficient for the house, by averaging the room temperature gradient over time divided by the temperature difference to outside, over periods when the room temperature is above the current set point by a margin and decreasing;
- Determine the rate at which the house heats up when heat is requested from the heating system, by averaging the room temperature gradient over time minus the current modelled cooling rate (which is the cooling coefficient multiplied by the current temperature difference to outside).

With such a model, the temperature trace in the house resulting from a set point trace can be predicted using a simple simulation of a thermostatic heating system. Steps to calculate the impact of an input on energy consumption are:

- Predict the internal (room) temperature for a period of time in the future with and without the interaction;
- Calculate the average internal temperature in each case; and
- Calculate the energy saving using the ratio of the differences between each of these average internal (room) temperatures and the external temperature, summated over the period in question. One may assume is that energy usage is proportional to the average internal-external temperature difference.

Thus the apparatus can provide an estimate of how much energy a particular interaction or suggestion would save the householder (or how much extra energy would be expended).

The output of the previous steps will be a set of candidate messages to go to the householder.

A filtering and ranking algorithm may be used to decide which messages (if any) to send to the householder.

Frequency thresholds may be used to filter out messages that are generated too frequently.

A global threshold may control the total frequency and a type-specific threshold may control the frequency for each category of messages. Those values can be predefined, but householders may also be allowed to set the thresholds for their own preference.

An outcome threshold may be used to filter out messages which contain insignificant calculated outcomes. This threshold can be adaptive to householder behaviours and house condition. It may automatically decrease when it filters out too many actions and increase when too many messages would be passed, in order that householders only receive highly relevant messages about their heating usage.

A priority score may be pre-assigned to each type of message (in order to prioritise more important message types for example). Candidate messages may be ordered by the scores, and only the most important messages sent to the householder during a time window.

The apparatus may be configured to enable a user to set their own preferences for the message frequency thresholds, the outcome threshold and/or the priority scores. This may be done by the user in response to a message or by sending instructions at another time.

The next step is to deliver a message to the householder. The delivery method may be:

- An in-home display, which may or may not be the user interface for the heating controls system;
- SMS/text message;
- Other ways of sending a message to a smartphone or tablet or personal display (e.g. app push notifications);
- Email, e.g. for less frequent messages where more detail may be required;
- Web-based, for example alongside a web-based heating controls system;
- Social media may also be used, either as a way of delivering the message, or as an option for the householder to "share" their message - particularly if social connections have been used as an input.

Generally, the purpose of the messages is to increase the householder's engagement and confidence in operating their heating controls, and to provide energy savings from more frequent interactions, better understanding and persuasion to change behaviour.

There are different types of message that could be sent. They could be in the form of an immediate response to system changes. Examples of messages are:

- We noticed you put your heating up by one degree. We estimate this will cost you an extra 10% heating energy today.
- We have noticed that your occupancy was changed to OUT at 7:51am. This change could save you about 6% of your heating energy today.
- We have noticed that your target temperature was increased to 19.0C at 4:57pm. Your home will reach this temperature at about 6:42pm. This change could cost you about 9% extra heating energy today.
- Your AWAY period is now active, and is due to clear on 22/11/13. This small change could save you up to 34% of your heating energy during the AWAY period, and will still protect your home from the cold. You can cancel the AWAY period at any time.
- We have noticed that your IN temperature was decreased to 21C at 4:30pm. This small change could save you about 34% of your heating energy.
- We have noticed that your IN temperature was increased to 23C at 4:30pm. This small change could cost about 34% extra heating energy.
- Were you feeling chilly? We have noticed that your temperature has been turned up from 18.0C to 21.0C, before it had reached 18.0C. This increase could cost you extra heating energy today. Your home was already heating up as fast as it could, and will still reach your original temperature of 18.0C at 2:03pm.

Examples of calculations to determine the effect of user control inputs on energy consumption are as follows:

Example 1

For Home A, we learned the house heating rate was 0.270°C per 15 minutes and the cooling coefficient was -0.00458 per 15 minutes.

The Householder of Home A increased the temperature set point from 19.5°C to 23°C at 18:53:31. The room temperature at that moment was 21.04°C.

To calculate the energy cost of this single action, we first predicted the new heating schedule in the next 24 hours. According to the default schedule, the future system event in Home A would be:

- switch to ASLEEP at 23:00 with set point 16°C
- switch to IN at 7:00 the next day with set point 19.5°C
- switch to OUT at 9:00 with set point 5°C
- switch to IN at 17:00 with set point 19.5°C

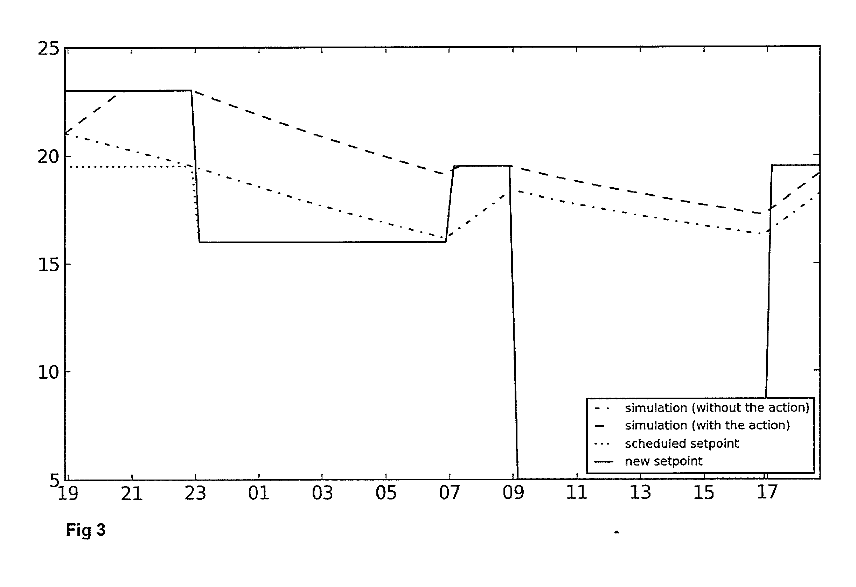

In Figure 3, the set point trace before and after the user interaction is shown.

Now we predict the next 24-hour room temperature based on the set point trace.

After the householder increased the temperature set point to 23, the house started heating towards the targeted temperature with a heating rate 0.270°C per 15 minutes. The house reached 23°C at 20:53:31, then for simplicity, we assumed the house would be kept at this temperature until 23:00 when the heating system switched to ASLEEP. In the meantime, if user didn't do the action, we assumed the house would slowly cool down. According to weather forecasting, the external temperature would be around 1°C, so the house would cool down with a weather compensated cooling rate around 0.09°C per 15 minutes.

Similarly, we predicted the internal temperature in Home A until 24 hours later.

Now we can calculate the average internal temperature for the next 24 hours.

- The average internal temperature with the interaction (increase temperature to 23) would be 20.01°C.
- The average internal temperature without the interaction would be 17.97°C.
- According to weather forecasting, the average external temperature would be 0.94°C during that time window.

We assumed energy usage is proportional to the average internal-external temperature difference, so ratio of energy consumption would be:

$$\frac{(20.01-0.94)-(17.97-0.94)}{(17.97-0.94)}=11.98\%$$

Thus, we know the user would use about 11.98% extra heating energy by this single interaction.

Example 2

For Home B, we learned the house heating rate was 0.60°C per 15 minutes and the cooling coefficient was -0.00327°C per 15 minutes.

The Householder of Home B changed occupancy to OUT at 09:15:44. The room temperature at that moment was 16.9°C.

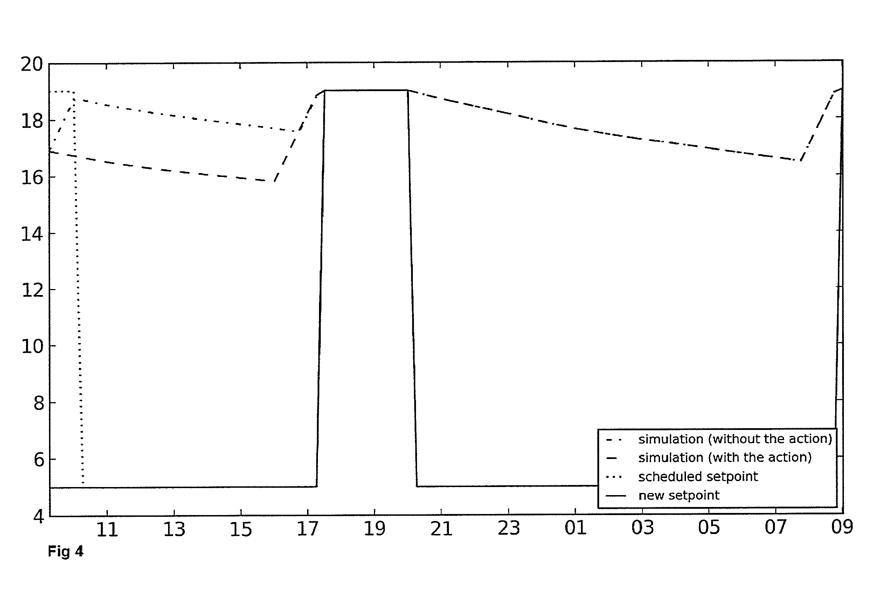

To calculate the energy saved by this single action, we first predicted the new heating schedule in the next 24 hours. According to the default schedule (see Figure 4), the future system event in Home B would be:

- switch to IN at 17:30 with set point 19°C
- switch to ASLEEP at 20:05 with set point 5°C
- switch to IN at 9:00 the next day with set point 9°C

Note that if the householder didn't make the change, the heating system would automatically switch to OUT at 10:00.

Similar to Example 1, we predict the average internal temperature for the next 24 hours.

The average internal temperature with the interaction (change occupancy to OUT) would be 17.38°C.

- The average internal temperature without the interaction would be 17.92°C.
- According to weather forecasting, the average external temperature would be 6.45 °C during that time window.

$$ratio = \frac{(17.92-6.45)-(17.38-6.45)}{(17.92-6.45)} = 5.58\%$$

Thus, we know the user would save about 5.58% extra energy by this single interaction.

Example 3

For Home C, we learned the house heating rate was 0.24°C per 15 minutes and the cooling coefficient was -0.00147°C per 15 minutes.

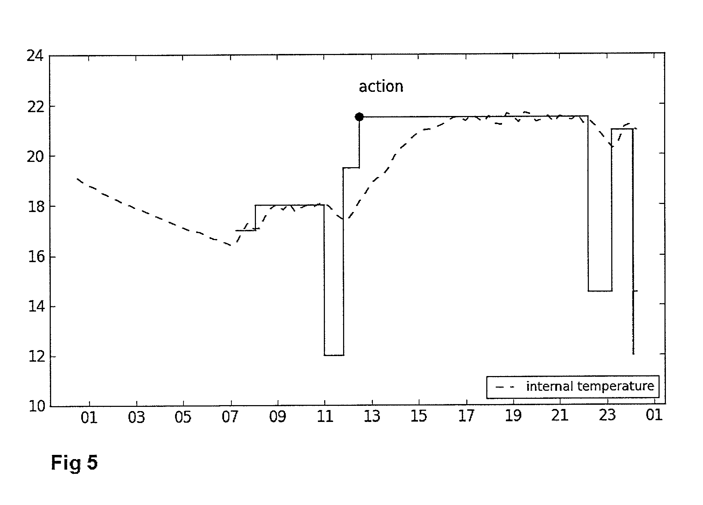

As shown in Figure 5, the Householder of Home C increased temperature to 19.5°C at 11:48:36, then he increased temperature again to 21.5°C at 12:29:03. The room temperature at that moment was 18.11°C, which means the boiler was already heating up as fast as it could.

As the householder had done a lot of similar interactions before, i.e. raised the set point before it was reached, we would like to send a message to tell him this change would not make his house heat any faster and would cost him more energy.

Using the same method described above, we predicted the average internal temperature for the next 24 hours. We predicted the house would heat up towards the targeted temperature with a heating rate at 0.240°C per 15 minutes.

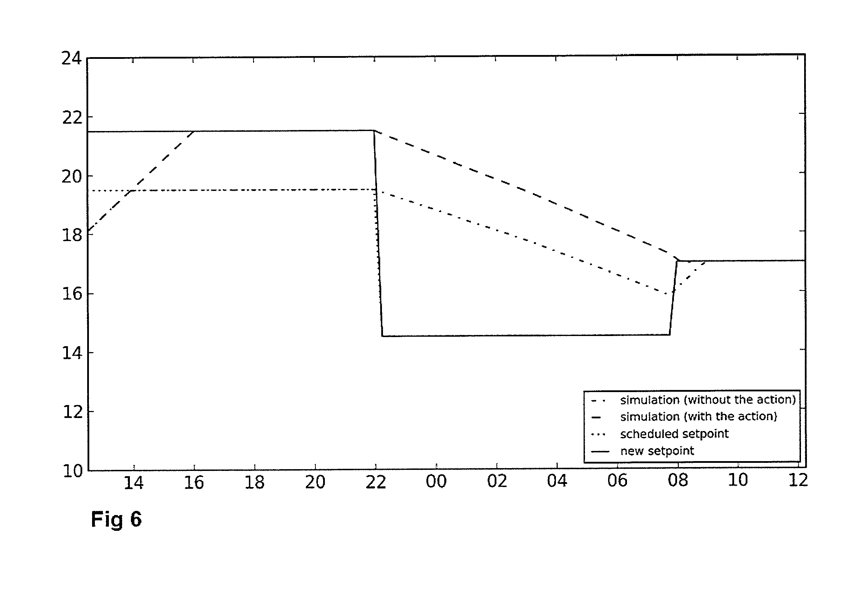

- Without the second change, the house would reach 19.5°C at about 13:55 then keep at that temperature until 22:00.
- With the second change, the house would still reach 19.5°C at about 13:55, and then heat up towards 21.5°C (see Figure 6).

We calculated average internal temperatures for the next 24 hours.

- The average internal temperature with the interaction (increase temperature to 21.5°C) would be 19.53°C
- The average internal temperature without the interaction would be 18.23°C
- According to weather forecasting, the average external temperature would be 7.34 °C during that time window

Then, we sent a message to the householder:

Were you feeling chilly? We have noticed that your temperature has been turned up from 19.5C to 21.5C, before it had reached 19.5C. This increase could cost you 11.9% extra heating energy today. Your home was already heating up as fast as it could, and will still reach your original temperature of 19.5C at about 1:55pm.

Although the embodiments of the invention described with reference to the drawings comprise processes performed by a processing arrangement, the invention also extends to computer programs comprising instructions for causing a processing arrangement or a computer to perform the processes. More particularly, computer programs on or in a carrier, adapted for putting the invention into practice are encompassed by the present disclosure. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

Thus, the present invention provides a computer program comprising program instructions for causing a computer to perform the methods described herein. Furthermore it includes provision of such a computer program on a carrier, embodied in a record medium, stored in a computer electronic memory, embodied in a read-only electronic memory, or carried on an electrical carrier signal.

**Claims**

1. Apparatus for analysing the operation by a user of a temperature management system for heating and/or cooling a space within a building, wherein the apparatus comprises a data processing arrangement having:

an input arrangement for receiving input signals relating to the temperature inside the space and outside the building, and user control inputs;
an electronic memory for storing a schedule of set point temperatures corresponding to the duration of a control period; and
an output arrangement for outputting signals,

and wherein the processing arrangement is configured to:

analyse a user control input received via its input arrangement to determine whether it corresponds to a predetermined category of user control inputs;
after detection of a user control input which corresponds to one of a plurality of predetermined categories of user control inputs, calculate a value relating to the effect of the user control input on the energy consumption of the system over a subsequent time period; and
generate an output signal at its output arrangement to cause a message to be delivered to the user comprising the calculated value.

2. Apparatus of claim 1, wherein the processing arrangement is configured to generate the output signal when at least two user control inputs have been detected which correspond to the same category.

3. Apparatus of claim 1 or claim 2, wherein one of the predetermined categories of user control inputs is user control inputs requesting an increase in the current set point when the current temperature of the space is below the current set point.

4. Apparatus of any preceding claim, wherein one of the predetermined categories of user control inputs is user control inputs requesting an increase or decrease in the current set point by more than a predetermined amount.

5. Apparatus of any preceding claim, wherein one of the predetermined categories of user control inputs is user control inputs indicating that the space will be unoccupied.

6. Apparatus of any preceding claim, wherein the processing arrangement is configured to calculate the value with reference to the schedule and the schedule as modified by the user control input.

7. Apparatus of any preceding claim, wherein one of the predetermined categories of user inputs is user inputs setting a set point in the schedule for an overnight period or a period identified by the user as a period when the space will be unoccupied, with the set point being greater than a predetermined threshold, and the calculated value is determined with reference to the schedule as modified by the user control input and the schedule as modified by a set point lower than that set by the user control input for the relevant period.

8. Apparatus of any preceding claim, wherein one of the predetermined categories of user inputs is user inputs requesting a decrease in the current set point when the current temperature of the space is below the current set point, and the current set point is above a predetermined threshold.

9. Apparatus of claim 8, wherein the calculated value is determined with reference to the current schedule and the schedule as modified by a set point lower than that of the current schedule for the current period.

10. Apparatus of any preceding claim, wherein the electronic memory stores a maximum message generation rate for each category of user control inputs and the data processing arrangement causes a message to be delivered to the user providing that this will not exceed said maximum message generation rate for the relevant category of user control inputs.

11. Apparatus of any preceding claim, wherein the electronic memory stores an overall maximum message generation rate and causes a message to be delivered to the user providing that the overall maximum message generation rate is not exceeded.

12. Apparatus of any preceding claim, wherein the processing arrangement is configured to check whether the calculated value exceeds a predetermined value threshold and only causes a message to be delivered to the user if the value threshold is exceeded.

13. Apparatus of claim 12, wherein the processing arrangement is configured to decrease the predetermined value threshold if the rate at which calculated values above the predetermined value threshold are generated is below a minimum message generation rate threshold and/or increase the predetermined value threshold if the rate at which calculated values above the predetermined value threshold are generated is above a maximum message generation rate threshold.

14. Apparatus of any preceding claim, wherein a priority score is assigned to each category of user control inputs, and a message relating to a higher priority score is sent in preference to a message having a lower priority score.

15. A method of analysing the operation by a user of a temperature management system for heating and/or cooling a space within a building, wherein the apparatus comprises a data processing arrangement having:

an input arrangement for receiving input signals relating to the temperature inside the space and outside the building, and user control inputs;
an electronic memory for storing a schedule of set point temperatures corresponding to the duration of a control period; and
an output arrangement for outputting signals,

and the method comprises carrying out the following steps with the data processing arrangement:

analysing a user control input received via the input arrangement and determining that it corresponds to one of a of plurality of predetermined categories of user control inputs;
calculating a value relating to the effect of the user control input on the energy consumption of the system over a subsequent time period; and
generating an output signal at its output arrangement to cause a message to be delivered to the user comprising the calculated value.

FIG. 1

EP 2 905 670 A1

Live event data
(interactions,
measured temperatures)

External data
(e.g. calendar, location)

Analysis apparatus

*historical data accumulation*

*historical data accumulation*

Live Data Cleaning and Filtering

*Filtered data*

Model matching

Specific behaviour detection

Behaviour profile

House thermal model

*Message candidates*

Outcome calculations

*Message*    *content*

Message Ranking and Filtering

Message delivery
(information + outcome + suggestion)

**Fig 2**

Fig 3

legend:
- · simulation (without the action)
— simulation (with the action)
· · · scheduled setpoint
—— new setpoint

Fig 4

**Fig 5**

EP 2 905 670 A1

Fig 6

Europäisches
Patentamt

European
Patent Office

Office européen
des brevets

# EUROPEAN SEARCH REPORT

Application Number

EP 14 16 2116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/274928 A1 (MATSUOKA YOKY [US] ET AL) 17 October 2013 (2013-10-17) | 1,5,6,15 | INV.<br>G05D23/19 |
| A | * paragraphs [0006], [0069], [0091], [0150], [0159], [0164] - [0165], [0197], [0206], [0210], [0213], [0215], [0220] - paragraphs [0222], [0227]; claims 1,4-8; figures 7-8,15A-15G, 31A-32,38,43B-46 * | 2-4,7-14 | F24F11/00 |
| | ----- | | |
| A,D | EP 2 157 408 A1 (EGMOND NICOLAAS WILHELMUS JOZE [NL]) 24 February 2010 (2010-02-24) * claim 1; figures 2-3 * | 1-15 | |
| | ----- | | |

TECHNICAL FIELDS
SEARCHED     (IPC)

G05D
F24F
F24D

The present search report has been drawn up for all claims

| Place of search | Date of completion of the search | Examiner |
|---|---|---|
| Munich | 2 September 2014 | Mallet, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 16 2116

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2014

| Patent document cited in search report | | Publication date | Patent family member(s) | Publication date |
|---|---|---|---|---|
| US 2013274928 | A1 | 17-10-2013 | NONE | |
| EP 2157408 | A1 | 24-02-2010 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2157408 A

- GB 1320134 A